(19) **Europäisches Patentamt**
**European Patent Office**
**Office européen des brevets**

(11) **EP 1 825 164 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: 05799682.9

(22) Anmeldetag: **21.10.2005**

(51) Int Cl.:
**F16D 65/14** *(2006.01)*

(86) Internationale Anmeldenummer:
**PCT/EP2005/011359**

(87) Internationale Veröffentlichungsnummer:
**WO 2006/058581 (08.06.2006 Gazette 2006/23)**

(54) **SCHEIBENBREMSE FÜR EIN FAHRZEUG**

DISC BRAKE FOR A VEHICLE

FREIN A DISQUE POUR VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.11.2004 DE 102004057914**
**11.02.2005 DE 102005006263**

(43) Veröffentlichungstag der Anmeldung:
**29.08.2007 Patentblatt 2007/35**

(73) Patentinhaber: **KNORR-BREMSE SYSTEME FÜR NUTZFAHRZEUGE GMBH**
**80809 München (DE)**

(72) Erfinder: **IRASCHKO, Johann**
**85301 Schweitenkirchen (DE)**

(74) Vertreter: **Mattusch, Gundula**
**c/o Knorr-Bremse AG**
**Moosacher Strasse 80**
**80809 München (DE)**

(56) Entgegenhaltungen:
**DE-A1- 4 032 885      DE-A1- 4 212 384**
**DE-A1- 4 230 830      US-A- 5 547 048**

**Beschreibung**

Die vorliegende Erfindung betrifft eine Scheibenbremse für ein Fahrzeug, gemäß dem Oberbegriff des Anspruchs 1, wie z.B. aus DE-A- 42 30 830 bekannt.

Eine derartige, vorzugsweise druckluft- oder elektronisch betätigbare Scheibenbremse ist aus der DE 42 12 384 A1 sowie der EP 0 688 404 B1 bekannt.

Dabei ist das Druckteil als eine im Querschnitt teilzylindrische Wä1zl.olle ausgebildet, die sowohl an den Exzenter angeformt sein kann wie auch an die Brücke.

In jedem Fall ist ein Gleitlager vorgesehen, das als Gegenlager zu der Wälzrolle fungiert und in der die Wälzrolle einliegt.

Um einen guten Wirkungsgrad und eine geringe Hysterese zu erreichen, die als wichtiger Kennwert für die Dosierbarkeit einer Bremse steht, ist neben einer hohen Kraftübersetzung eine geringe Reibung innerhalb des Gesamtsystems der Zuspanneinrichtung gewünscht.

Zur Erfüllung dieser Forderung sind die Drehlager, an denen sich der Hebel, das heißt, dessen Exzenter am Bremssattel abstützt, als Wälzlager ausgebildet, wohingegen, wie erwähnt, die Abstützung des Exzenters an der Brücke mittels eines Gleitlagers erfolgt.

Prinzipiell ergibt sich die reibungsbedingte Verlustarbeit eines Mechanismus aus den Faktoren Reibkraft und Reibweg, so dass eine Reduzierung der Reibarbeit durch Verminderung der Reibkraft und/oder durch Minimierung des Reibweges erzielt wird.

Zur Optimierung der bekannten Scheibenbremse wird also eine Verringerung der Reibungsarbeit bei der Betätigung der Zuspannvorrichtung gewünscht, da dadurch die Betätigungskräfte entsprechend minimiert werden können.

Der vorliegenden Erfindung liegt daher die Aufgabe zugrunde, eine Scheibenbremse der gattungsgemäßen Art so weiter zu entwickeln, dass ihre Zuspannvorrichtung reibungsarm, robust und dauerfest betreibbar ist.

Diese Aufgabe wird durch eine Scheibenbremse gelöst, die die Merkmale des Anspruchs 1 aufweist.

Durch diese konstruktive Ausbildung wird eine Minimierung des Reibweges erreicht mit der Folge, dass, da in direktem Zusammenhang, die Reibarbeit reduziert wird.

Während die bislang als Druckteil eingesetzte Wälzrolle, auch um eine geringere Flächenpressung zu erreichen, einen Durchmesser im Bereich von 16 mm aufweist, ist der Radius der Schwenkkante entsprechend der Erfindung sehr klein gehalten. Prinzipiell ergibt sich für die Reibarbeit folgender Zusammenhang:

$$E_{Reib} = F_{Lager} \times \mu_{Lager} \times \tfrac{1}{2}\, d_{Zylinder} \times \varphi_{Hebel}$$

Die Reibarbeit ist also direkt proportional dem Durchmesser der Wälzrolle bzw. dem doppelten Radius der Schwenkkante.

Durch die Verwendung eines hochfesten Materials bei der Ausbildung des Druckteils kann eine höhere Flächenpressung in Kauf genommen werden, ohne dass sich diese schädigend auf das Druckteil auswirkt.

Diese hochfeste Schwenkkante, vorzugsweise aus gehärtetem Spezialstahl kann nach einer vorteilhaften Weiterbildung der Erfindung mit einer speziellen Beschichtung versehen sein, durch die die Gleiteigenschaft und die Verschleißfestigkeit der Gleitflächen gesteigert wird. Dabei kann eine solche Beschichtung sowohl an der Schwenkkante wie auch an dem zugeordneten Gegenlager vorgesehen sein.

Als weiterer herauszustellender Vorteil der Erfindung ist zu nennen, dass auf ein Gleitlager verzichtet werden kann, wodurch sich bei gleichbleibenden Raummaßen insbesondere der Querschnitt des Hebels vergrößert werden kann, wenn das Druckteil Bestandteil der Brücke ist. Durch die theoretische Querschnittserhöhung ergibt sich die Möglichkeit, den Exzenter im Querschnitt kleiner zu dimensionieren bei gleichbleibender Torsionsfestigkeit, wodurch sich der Bauraumbedarf verringern und aufgrund des sich dabei ebenfalls verringernden Reibweges die Reibarbeit im Bereich der Wälzlagerung ebenfalls reduziert wird.

Im übrigen kann das Druckteil als separates Teil an dem Hebel befestigt sein.

Ist hingegen das Druckteil Bestandteil der Brücke so ist ebenfalls eine separate Ausbildung an die Brücke möglich.

Das Gegenlager, an dem sich das Druckstück abstützt, kann plan ausgebildet sein oder konkav gewölbt. Bei Anordnung des separaten Druckteiles an der Brücke kann es aus Spezialstahl hergestellt werden, wohingegen die Brücke selbst üblicherweise aus einem Gussmaterial besteht. Insofern kann das Druckteil exakt an die gestellten Anforderungen hinsichtlich Reibwert und Festigkeit angepasst werden.

Im Fall das Druckteil ist Bestandteil des Hebels, so bildet der in der aus Guss bestehenden Brücke vorhandene Graphitanteil eine dauerhafte Trockenschmierung, durch die der Reibungskoeffizient zwischen dem Druckteil und dem Gegenlager ebenfalls günstig beeinflusst wird.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

Figur 1          den schematischen Aufbau einer erfindungsgemäßen Scheibenbremse in einer geschnittenen Seitenansicht

Figur 2          eine Scheibenbremse in einer teilweise geschnittenen Draufsicht

Figuren 3 u. 4    jeweils ein Ausführungsbeispiel der Erfindung als Teilausschnitt in einer geschnittenen Seitenansicht

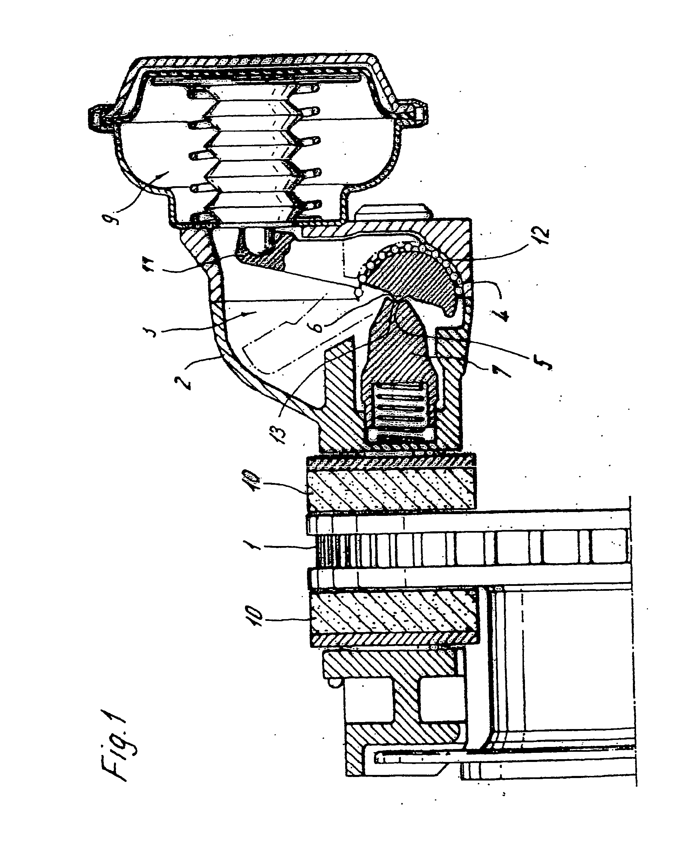

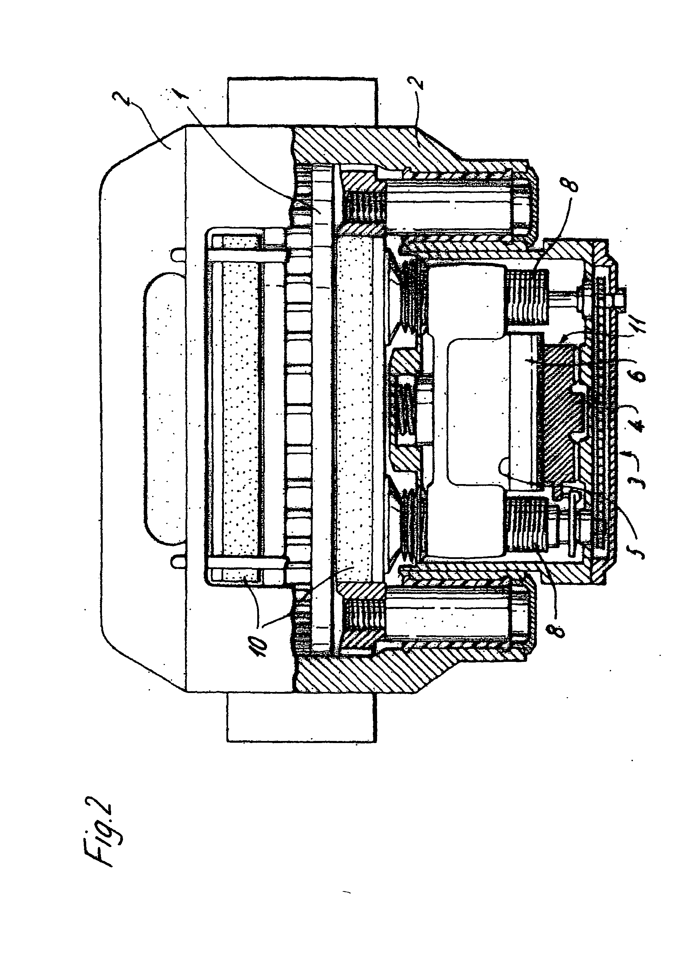

In den Figuren 1 und 2 ist eine Scheibenbremse für ein Fahrzeug, insbesondere ein Nutzfahrzeug gezeigt, die eine Bremsscheibe 1 aufweist, die an einer nicht dargestellten Achse des Nutzfahrzeuges befestigt ist und von einem Bremssattel 2 umfasst ist, der in Richtung der Bremsscheibe 1 verschiebbar ist.

Im Bremssattel 2 ist eine Zuspannvorrichtung 3 angeordnet, mit der bei einer über einen vorzugsweise pneumatisch betätigten Bremszylinder 9 ausgelösten Bremsung Bremsbeläge 10 an die Bremsscheibe 1 drückbar sind.

Hierzu greift die Zuspannvorrichtung 3 an zwei parallel und mit Abstand zueinander in einer Brücke 7 angeordnete Stellspindeln an.

Wie weiter zu sehen ist, weist die Zuspannvorrichtung 3 einen schwenkbaren Hebel 11 auf, der mit seinem einen Ende mit dem Bremszylinder 9 in Wirkverbindung steht und in seinem anderen Endbereich schwenkbar in einem als Wälzlager ausgebildeten Drehlager 12 des Bremssattels 2 gelagert ist.

Dieser Endbereich ist als Exzenter 4 ausgebildet, wozu außermittig zur gedachten Mittenachse des Drehlagers 12 ein Druckteil 6 an den Exzenter 4 angeformt ist, das eine hochfeste Schwenkkante 13 aufweist, die an einem Gegenlager 5 der als Gussteil ausgebildeten Brücke 7 anliegt.

Dabei wird die Schwenkkante durch das freie Ende des nasenförmigen Druckteiles 6 gebildet und zeichnet sich durch einen relativ kleinen Radius aus, während das Gegenlager 5 als konkave Ausnehmung gestaltet ist. Somit liegt die Schwenkkante 13 nur mit einer sehr kleinen Fläche an dem Gegenlager 5 an, wodurch sich ein verringerter Reibweg und daraus resultierend beim Verschwenken eine Minimierung der Reibarbeit ergibt.

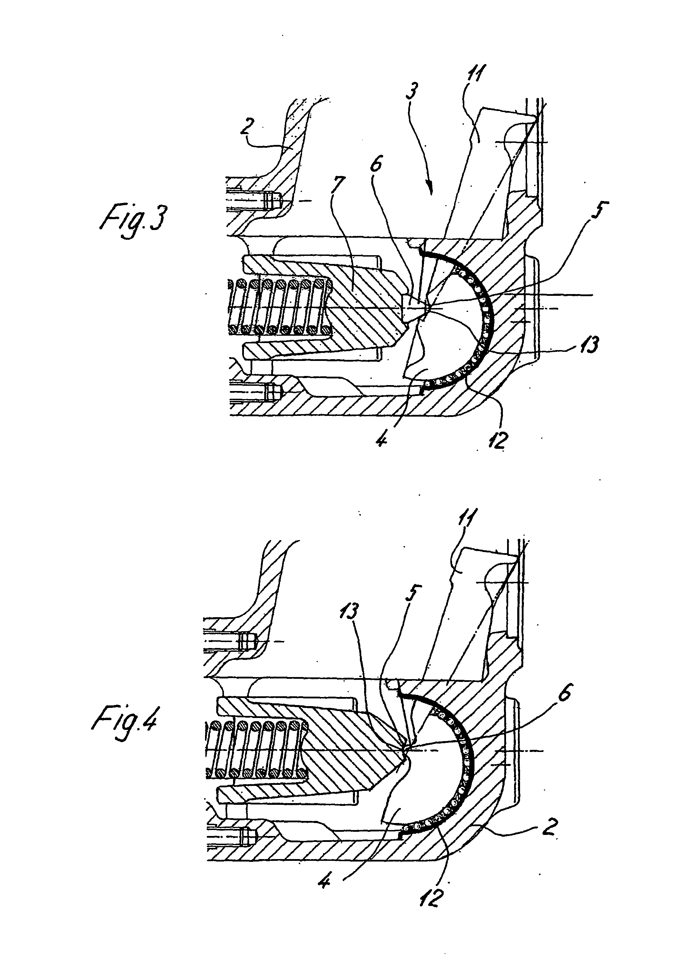

In diesem Sinne ist auch das Druckteil 6 bei dem in der Figur 3 gezeigten Ausführungsbeispiel ausgebildet, bei dem das Druckteil 6 als separate, aus einem Spezialstahl hergestellte Leiste ausgebildet ist, die in die Brücke 7 eingelassen ist und die sich mit ihrer Schwenkkante 13 an dem in diesem Fall in dem Exzenter 4 vorgesehenen Gegenlager 5 abstützt, während bei dem in den Figuren 1 und 4 gezeigten Beispiel die Schwenkkante 13 und damit das Druckteil 6 einstückig mit dem Exzenter 4 ausgebildet ist.

Prinzipiell denkbar ist aber auch, das exzenterseitige Druckteil 6 als separates Bauteil auszubilden und in geeignete Form mit dem Exzenter 4 zu verbinden, beispielsweise form-, kraft- oder stoffschlüssig, letzteres durch Verschweißen, Verlöten oder dergleichen.

Die separate Herstellung des Druckteiles bietet den Vorteil, dass der zum Einsatz kommende hochfeste Spezialstahl, der gegenüber normalem Stahl oder Guss relativ teuer ist, nicht für das gesamte, das Druckteil tragende Bauteil (Brücke oder Exzenter) Verwendung finden muss. Im übrigen ist auch eine zusätzliche, die Festigkeit noch weiter erhöhende Bearbeitung bei einem separatem Bauteil einfacher zu bewerkstelligen.

Da der Hebel 11 üblicherweise aus hochfestem Material besteht, bietet sich hier natürlich die Möglichkeit an, das Druckteil 6 einstückig mit dem Exzenter 4 bzw. dem Hebel 11 auszubilden.

Wie aus den Figuren sehr deutlich erkennbar ist, kann auf den Einsatz eines Gleitlagers, an dem sich das Druckteil ansonsten abstützen würde, verzichtet werden, so dass unter Beibehaltung der geforderten Torsionsfestigkeit des Druckteiles 6 der Durchmesser des Drehlagers 12 verringert werden kann mit dem Vorteil eines geringeren Bauraumbedarfs.

**Bezusszeichenliste**

1    Bremsscheibe
2    Bremssattel

| 3 | Zuspannvorrichtung |
|---|---|
| 4 | Exzenter |
| 5 | Gegenlager |
| 6 | Druckteil |
| 7 | Brücke |
| 8 | Stellspindel |
| 9 | Bremszylinder |
| 10 | Bremsbelag |
| 11 | Hebel |
| 12 | Drehlager |
| 13 | Schwenkkante |

**Patentansprüche**

1. Scheibenbremse für ein Fahrzeug, insbesondere ein Nutzfahrzeug, mit einer in einem Bremssattel (2) angeordneten Zuspannvorrichtung (3), mit der bei einer bremsung über mindestens eine, vorzugsweise in einer Brücke (7) angeordnete Stellspindel (8) ein Bremsbelag (10) an eine Bremsscheibe (1) drückbar ist, wobei die Zuspannvorrichtung (3) mit einem Hebel (11) versehen ist, der im Abstützbereich mit Drehlagern (12) des Bremssattels (2) als Exzenter (4) ausgebildet ist und über ein Druckteil (6) schwenkbar an der Brücke (7) anliegt, wobei das Druckteil (6) eine am Exzenter (4) oder an der Brücke (7) anliegende hochfeste Schwenkkante (13) aufweist, **dadurch gekennzeichnet, dass** das Druckteil (6) als separate Leiste mit der Brücke (7) oder dem Exzenter (4) verbunden ist.

2. Scheibenbremse nach Anspruch 1, **dadurch gekennzeichnet, dass** das Gegenlager (5) konkav ausgebildet ist.

3. Scheibenbremse nach Anspruch 2, **dadurch gekennzeichnet, dass** der Krümmungsradius des Gegenlagers (5) größer ist als der minimierte Radius der Schwenkkante (13).

4. Scheibenbremse nach einem der vorhergehenden Ansprüche, **dadurch gekennzeichnet, dass** das Druckteil (6) form-, kraft- oder stoffschlüssig mit der Brücke (7) oder dem Exzenter (4) verbunden ist.

5. Scheibenbremse nach einem der vorhergehenden Ansprüche 2 bis 4, **dadurch gekennzeichnet, dass** die Schwenkkante (13) und/oder das Gegenlager (5) mit einer hochfesten Beschichtung versehen sind.

**Claims**

1. Disc brake for a vehicle, in particular a commercial vehicle, with an application device (3) located in a brake calliper (2), by means of which in a braking process a brake pad (10) can be pressed against a brake disc (1) by way of at least one actuating spindle (8) preferably located in a bridge (7), wherein the application device (3) is provided with a lever (11), which is designed as a cam (4) with pivot bearings (12) of the brake calliper (2) in the support region and pivotably bears against the bridge (7) by way of a pressure part (6), wherein the pressure part (6) is provided with a high-strength pivoting edge (13) bearing against the cam (4) or the bridge (7), **characterised in that** the pressure part (6) is joined to the bridge (7) or the cam (4) as a separate moulding.

2. Disc brake according to claim 1, **characterised in that** the counter-bearing (5) is concave.

3. Disc brake according to claim 2, **characterised in that** the radius of curvature of the counter-bearing (5) is larger than the minimised radius of the pivoting edge (13).

4. Disc brake according to any of the preceding claims, **characterised in that** the pressure part (6) is joined to the bridge (7) or the cam (4) positively, non-positively or by adhesive force.

5. Disc brake according to any of claims 2 to 4, **characterised in that** the pivoting edge (13) and/or the counter-bearing (5) are/is provided with a high-strength coating.

**Revendications**

1. Frein à disque pour un véhicule, en particulier un véhicule utilitaire, comprenant un moyen de serrage de frein (3) disposé dans un étrier de frein (2), dans lequel, au cas de serrage du frein, une garniture de frein (10) se peut presser contre un disque de frein (1) via au moins une broche de réglage (8), qui est disposée, de préférence, dans un pont (7), dans lequel ledit moyen de serrage de frein (3) est muni d'un levier (11), qui est configuré sous forme d'un excentrique (4), dans la zone d'appui aux coussinets de pivotement (12) dudit étrier de frein (2), en portant contre ledit pont (7) à pivoter via un élément presseur (6), audit élément presseur (6) renfermant une arête de pivotement très forte (13), qui porte contre ledit excentrique (4) et/ou ledit pont (7), **caractérisé en ce que** ledit élément presseur (6) est relié en tant que barre séparée audit pont (7) ou audit excentrique (4).

2. Frein à disque selon la revendication 1, **caractérisé en ce que** le palier-support (5) présente une configuration concave.

3. Frein à disque selon la revendication 2, **caractérisé en ce que** le rayon de courbure dudit palier-support (5) est plus grand que le rayon minimisé de ladite arête de pivotement (13).

4. Frein à disque selon la revendication 3, **caractérisé en ce que** ledit élément presseur (6) est relié audit pont (7) ou audit excentrique (4) de façon positive, par adhérence ou par matériel.

5. Frein à disque selon une quelconque des revendications précédentes 2 à 4, **caractérisé en ce que** ladite arête de pivotement (13) et/ou ledit palier-support (5) sont munis d'un revêtement très fort.

Fig.1

Fig.2

Fig.3

Fig.4

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4230830 A
- DE 4212384 A1

- EP 0688404 B1